# FASCICULE DE BREVET EUROPEEN

(11) **EP 3 016 290 B1**
(45) Date de publication et mention de la délivrance du brevet: **12.12.2018**
(21) Numéro de dépôt: 15191600.4
(22) Date de dépôt: 27.10.2015
(51) Int. Cl.: H04B 1/06, H04W 52/02

(54) **PROCÉDÉ DE GESTION DE L'ACTIVATION D'UNE CHAÎNE DE RÉCEPTION D'UN MODULE RADIO**
STEUERUNGSVERFAHREN DER AKTIVIERUNG EINER EMPFANGSKETTE EINES FUNKMODULS
METHOD FOR MANAGING THE ACTIVATION OF A RECEIVING CHANNEL OF A RADIO MODULE

(30) Priorité: 29.10.2014 FR 1460371
(43) Date de publication de la demande: 04.05.2016
(73) Titulaire: Delta Dore, 35270 Bonnemain (FR)
(72) Inventeur: Leduc, Benoît, 35270 BONNEMAIN (FR); Rouxel, Yann, 35270 BONNEMAIN (FR); Leferrand, Vincent, 35270 BONNEMAIN (FR)
(74) Mandataire: Cabinet Le Guen Maillet

(56) Documents cités:
- US-A1- 2010 150 042

## Description

La présente invention concerne un procédé et un dispositif de gestion de l'activation d'une chaîne de réception d'un module radio.

Dans les systèmes d'alarme anti intrusion, de domotique ou de gestion de la température dans un bâtiment, certains dispositifs tels que des capteurs, des transmetteurs, des sirènes, le ou les dispositifs centralisés qui gèrent le système, ont leur alimentation électrique assurée par des piles ou des batteries qui ont une capacité à fournir de l'énergie électrique limitée. Ces dispositifs utilisent le médium radio comme moyen de communication avec le dispositif centralisé. La consommation d'un module radio en énergie électrique pour l'échange de messages radio est non négligeable, cette consommation pénalise la durée de vie des piles ou batteries des dispositifs et nécessite des changements de piles ou des recharges de batteries fréquents.

La demande de brevet US 2010/150042 divulgue un appareil et un procédé de transmission et de réception d'un signal de réveil. L'invention est défini par les revendications. La présente invention a pour but de résoudre les inconvénients de l'art antérieur en proposant un procédé et un dispositif de gestion de l'activation d'une chaîne de réception d'un module radio de manière à accroître la longévité des éléments de fourniture en énergie électrique du dispositif de réception tout en étant robuste contre le bruit susceptible de générer des activations intempestives de la chaîne de réception du module radio et en maintenant de bonnes performances sur la détection du préambule.

A cette fin, selon un premier aspect, l'invention propose un procédé de gestion de l'activation d'une chaîne de réception d'un module radio recevant au moins un message constitué d'un préambule et d'au moins une trame, caractérisé en ce que le procédé comporte les étapes de :
- mise de la chaîne de réception du module radio dans un mode de réception pendant une première durée,
- détermination si un nombre prédéterminé d'octets ayant une valeur prédéterminée est reçu pendant la première durée de mise de la chaîne de réception du module radio dans le mode de réception,
- maintien de la chaîne de réception du module radio dans un mode de réception pendant une seconde durée, inférieure ou égale à la première durée, si le nombre prédéterminé d'octets ayant une valeur prédéterminée est reçu pendant la première durée,
- détermination si un nombre prédéterminé d'octets ayant une valeur prédéterminée est reçu pendant la seconde durée de mise de la chaîne de réception du module radio dans le mode de réception,
- mise de la chaîne de réception du module radio dans un mode de veille pendant une troisième durée si le nombre prédéterminé d'octets ayant une valeur prédéterminée n'est pas reçu pendant la première durée, la troisième durée étant au moins deux cent fois plus longue que la première durée,
- mise de la chaîne de réception du module radio dans un mode de veille pendant la troisième durée si le nombre prédéterminé d'octets ayant une valeur prédéterminée n'est pas reçu pendant la seconde durée.

La présente invention concerne aussi un dispositif de gestion de l'activation d'une chaîne de réception d'un module radio recevant au moins un message constitué d'un préambule et d'au moins une trame, caractérisé en ce que le dispositif comporte :
- des moyens de mise de la chaîne de réception du module radio dans un mode de réception pendant une première durée,
- des moyens de détermination si un nombre prédéterminé d'octets ayant une valeur prédéterminée est reçu pendant la première durée de mise de la chaîne de réception du module radio dans le mode de réception,
- des moyens de maintien de la chaîne de réception du module radio dans un mode de réception pendant une seconde durée, inférieure ou égale à la première durée, si le nombre prédéterminé d'octets ayant une valeur prédéterminée est reçu pendant la première durée,
- des moyens de détermination si un nombre prédéterminé d'octets ayant une valeur prédéterminée est reçu pendant la seconde durée de mise de la chaîne de réception du module radio dans le mode de réception,
- des moyens de mise de la chaîne de réception du module radio dans un mode de veille pendant une troisième durée si le nombre prédéterminé d'octets ayant une valeur prédéterminée n'est pas reçu pendant la première durée, la troisième durée étant au moins deux cent fois plus longue que la première durée,
- des moyens de mise de la chaîne de réception du module radio dans un mode de veille pendant la troisième durée si le nombre prédéterminé d'octets ayant une valeur prédéterminée n'est pas reçu pendant la seconde durée.

Ainsi, la longévité des éléments de fourniture en énergie électrique du dispositif de réception est accrue tout en étant robuste contre le bruit susceptible de générer des activations intempestives de la chaîne de réception du module radio.

Selon un mode particulier de l'invention, la troisième durée est égale ou inférieure à la durée du préambule.

Ainsi, la présente invention évite toute éventuelle non détection d'un préambule.

Selon un mode particulier de l'invention, le procédé comporte en outre l'étape de:
- maintien de la chaîne de réception du module radio dans un mode de réception pendant une quatrième durée, la quatrième durée étant égale à la durée restante de préambule et la durée de réception d'un nombre prédéterminé de trames suivant le préambule.

Ainsi, la consommation électrique nécessaire au fonctionnement de la chaîne de réception du module radio est optimisée.

Selon un mode particulier de l'invention, la première durée est égale à la durée de réception de trois octets et la seconde durée est égale à la durée de réception de deux octets.

Ainsi, la consommation électrique nécessaire au fonctionnement de la chaîne de réception du module radio est optimisée.

La présente invention présente ainsi un bon compromis en la réduction de la consommation électrique et la robustesse par rapport au bruit susceptible de générer des activations intempestives de la chaîne de réception du module radio.

Selon un mode particulier de l'invention, le procédé comporte en outre les étapes de:
- détermination, si un nombre prédéterminé d'octets ayant une valeur prédéterminée est reçu pendant la seconde durée de mise de la chaîne de réception du module radio dans le mode de réception, de la durée restante du préambule à recevoir,
- mise de la chaîne de réception du module radio dans un mode de veille pendant la durée restante déterminée,
- mise de la chaîne de réception du module radio dans un mode de réception pendant une quatrième durée, la quatrième durée étant égale à la durée de réception d'un nombre prédéterminé de trames suivant le préambule.

Ainsi, la consommation électrique nécessaire au fonctionnement de la chaîne de réception du module radio est optimisée.

Selon un mode particulier de l'invention, la durée restante du préambule à recevoir est déterminée à partir d'une information reçue pendant la première et/ou la seconde durée.

Ainsi, l'invention est particulièrement simple à implémenter.

Selon un mode particulier de l'invention, la somme des première et seconde durées est égale à la durée de réception d'au moins six octets.

L'invention concerne aussi un système d'alarme anti intrusion, de domotique ou de gestion de la température dans un bâtiment comportant des capteurs, un dispositif centralisé et un dispositif d'actionnement, caractérisé en ce que le dispositif centralisé et le dispositif d'actionnement comportent un dispositif de gestion de l'activation d'une chaîne de réception d'un module radio selon la présente invention.

L'invention concerne aussi les programmes d'ordinateur stockés sur un support d'informations, lesdits programmes comportant des instructions permettant de mettre en oeuvre les procédés précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un système dans lequel la présente invention est implémentée ;
la Fig. 2 représente un exemple d'architecture d'un dispositif de gestion de l'activation d'une chaîne de réception d'un module radio selon la présente invention ;
la Fig. 3 représente un exemple d'algorithme exécuté par le dispositif de gestion de l'activation d'une chaîne de réception d'un module radio selon un premier mode de réalisation de la présente invention ;
la Fig. 4a représente un exemple de préambule d'un message selon le premier mode de réalisation de la présente invention ;
Les Fig. 4b et 4c représentent des chronogrammes de l'activation d'une chaîne de réception d'un module radio selon le premier mode de réalisation de la présente invention ;
la Fig. 5 représente un exemple d'algorithme exécuté par le dispositif de gestion d'une chaîne de réception d'un module radio selon un second mode de réalisation de la présente invention ;
la Fig. 6a représente un exemple de préambule d'un message selon le second mode de réalisation de la présente invention ;
les Fig. 6b et 6c représentent des chronogrammes de l'activation d'une chaîne de réception d'un module radio selon le second mode de réalisation de la présente invention ;

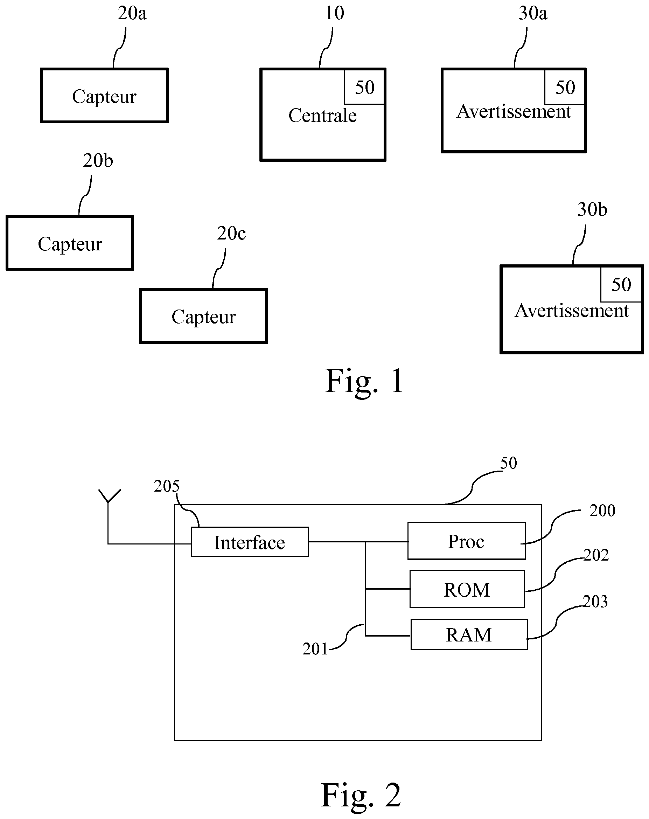

La **Fig. 1** représente un système dans lequel la présente invention est implémentée.

Le système comporte une pluralité de capteurs notés 20a, à 20c, un dispositif centralisé 10 et deux dispositifs d'actionnement notés 30a et 30b.

Le dispositif centralisé 10 est par exemple une centrale d'alarme ou une centrale domotique ou une centrale de régulation de la température d'un bâtiment.

Les capteurs 20 sont par exemple des détecteurs d'ouvertures ou périmétriques, des détecteurs de mouvements, des claviers, des écrans, des capteurs de température, de luminosité...

Les dispositifs d'actionnement 30 sont par exemple, une sirène, un transmetteur, des dispositifs de commande de chauffage, d'ouverture de volet occultant.

Les capteurs 20, les dispositifs d'actionnement 30, le dispositif centralisé 10 sont des dispositifs fonctionnant sur batterie dont il convient d'économiser leur consommation électrique pour garantir une longévité accrue de la batterie.

Dans la Fig. 1, cinq dispositifs 20 et 30 sont représentés. Le système peut comporter un nombre réduit ou plus important de capteurs 20 ou de dispositifs d'actionnement 30. Par exemple, le dispositif centralisé 10 est apte à gérer entre un et cinquante capteurs 20 et/ou dispositifs d'actionnement 30.

Le dispositif centralisé 10 doit être apte à recevoir de multiples messages des capteurs 20. Les dispositifs d'actionnement 30 doivent être en mesure de répondre dans les délais les plus brefs à une consigne envoyée par le dispositif centralisé. Une gestion optimisée de leur consommation en énergie électrique est donc nécessaire. Au moins le dispositif centralisé 10 et les dispositifs d'actionnement 30 comportent un dispositif de gestion de l'activation d'une chaîne de réception d'un module radio 50 selon l'invention.

Selon la présente invention, le dispositif de gestion de l'activation d'une chaîne de réception d'un module radio 50:
- met la chaîne de réception du module radio dans un mode de réception pendant une première durée,
- détermine si un nombre prédéterminé d'octets ayant une valeur prédéterminée est reçu pendant la première durée de mise de la chaîne de réception du module radio dans le mode de réception,
- maintient la chaîne de réception du module radio dans un mode de réception pendant une seconde durée, inférieure ou égale à la première durée, si le nombre prédéterminé d'octets ayant une valeur prédéterminée est reçu pendant la première durée,
- détermine si un nombre prédéterminé d'octets ayant une valeur prédéterminée est reçu pendant la seconde durée de mise de la chaîne de réception du module radio dans le mode de réception,
- met la chaîne de réception du module radio dans un mode de veille pendant une troisième durée si le nombre prédéterminé d'octets ayant une valeur prédéterminée n'est pas reçu pendant la première durée, la troisième durée étant au moins deux cent fois plus longue que la première durée,
- met la chaîne de réception du module radio dans un mode de veille pendant la troisième durée si le nombre prédéterminé d'octets ayant une valeur prédéterminée n'est pas reçu pendant la seconde durée.

La **Fig. 2** représente un exemple d'architecture d'un dispositif de gestion de l'activation d'une chaîne de réception d'un module radio selon la présente invention.

Le dispositif de gestion de l'activation d'une chaîne de réception d'un module radio selon la présente invention 50 comprend :
- un processeur, micro-processeur, ou microcontrôleur 200 ;
- une mémoire volatile 203 ;
- une mémoire non volatile 202;
- une interface radio 205 bidirectionnelle ;
- un bus de communication reliant le processeur 200 à la mémoire ROM 203, à la mémoire RAM 203 et un module radio 205.

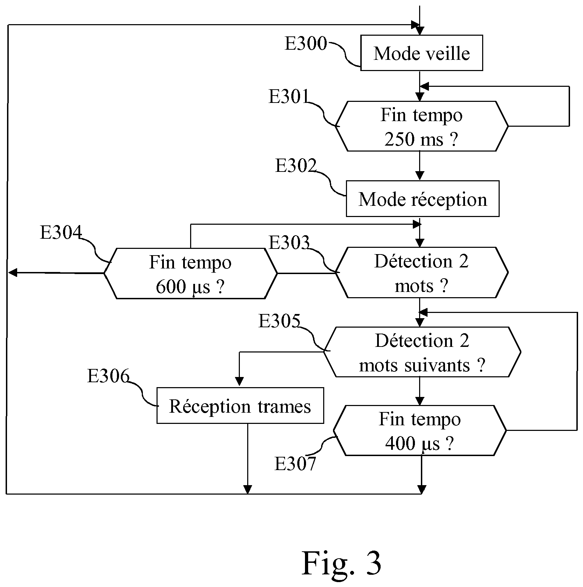

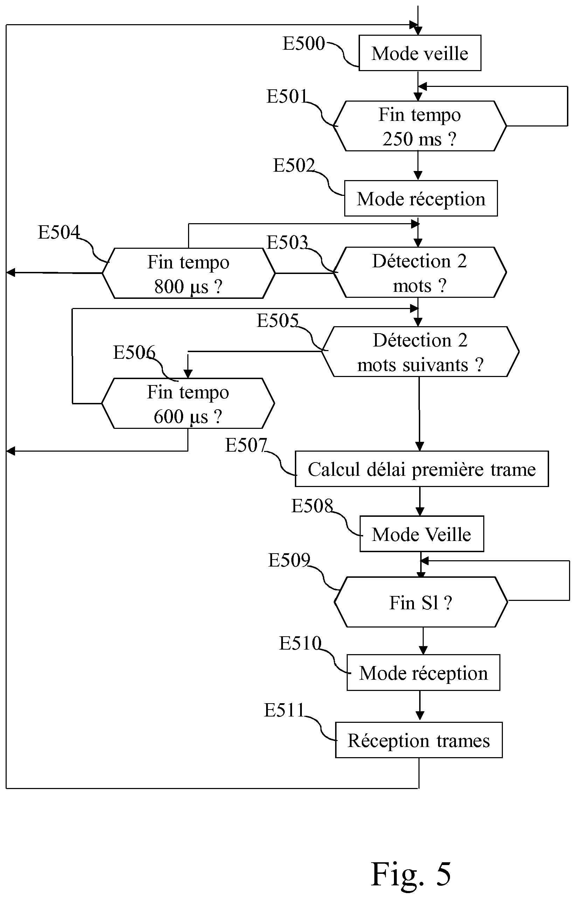

Le processeur 200 est capable d'exécuter des instructions chargées dans la mémoire volatile 203 à partir de la mémoire non volatile 202, d'une mémoire externe (non représentée), d'un support de stockage, tel qu'une carte SD ou autre, ou d'un réseau de communication. Lorsque le dispositif de gestion de l'activation d'une chaîne de réception d'un module radio 50 selon la présente invention est mis sous tension, le processeur 200 est capable de lire de la mémoire volatile 203 des instructions et de les exécuter. Ces instructions forment un programme d'ordinateur qui cause la mise en oeuvre, par le processeur 200, de tout ou partie du procédé décrit en relation avec la Fig. 3 ou 5.

Tout ou partie du procédé décrit en relation avec la Fig. 3 ou 5 peut être implémenté sous forme logicielle par exécution d'un ensemble d'instructions par une machine programmable, telle qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

La **Fig. 3** représente un exemple d'algorithme exécuté par le dispositif de gestion de l'activation d'une chaîne de réception d'un module radio selon un premier mode de réalisation de la présente invention.

Plus précisément, le présent algorithme est exécuté par le processeur 200 du dispositif de gestion de l'activation d'une chaîne de réception d'un module radio 50.

A l'étape E300, le processeur 200 met le module radio 205 dans un mode d'économie d'énergie. Le mode d'économie d'énergie consiste à mettre au moins la chaîne dédiée à la réception de messages dans un mode de veille consistant à interrompre l'alimentation électrique de tout ou partie des composants actifs de la chaîne de réception du module radio 205.

A cette même étape, le processeur 200 déclenche une temporisation Tempo. La temporisation Tempo est par exemple comprise entre 100 et 350 ms. Par exemple, la temporisation Tempo est égale à 250 ms.

A l'étape suivante E301, le processeur 200 vérifie si la temporisation Tempo est écoulée. Dans l'affirmative, le processeur 200 passe à l'étape E302. Dans la négative, le processeur 200 retourne à l'étape E301.

A l'étape E302, le processeur 200 met le module radio 205 dans un mode de réception. Le mode de réception consiste à alimenter en énergie électrique tout ou partie des composants actifs de la chaîne de réception du module radio 205. A cette même étape, le processeur 200 déclenche une temporisation Rx. La temporisation Rx est égale au moins au temps nécessaire à la réception de trois octets. Rx est, si par exemple la durée de transmission d'un octet est de 200µs, égale à 600µs.

A l'étape suivante E303, le processeur 200 vérifie si deux octets prédéterminés sont reçus. Selon la présente invention, un message radio est constitué d'un préambule suivi d'une ou plusieurs trames radio. Par exemple, le préambule a une durée de 250 ms et est suivi par trois trames d'une durée respective de 10 ms.

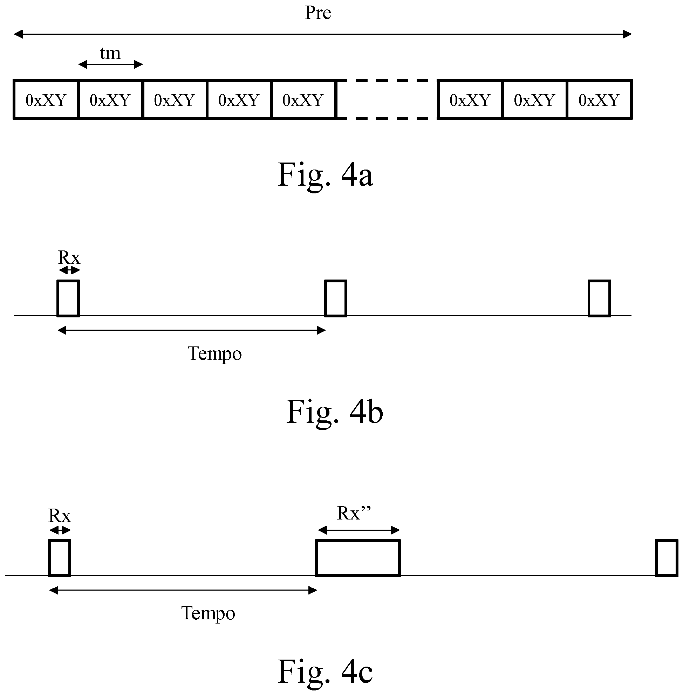

Un exemple de préambule est donné en référence à la Fig. 4a.

La **Fig. 4a** représente un exemple de préambule d'un message reçu par un dispositif de réception de message selon le premier mode de réalisation de la présente invention.

Selon le premier mode de réalisation de la présente invention, le préambule a une durée Pre de 250ms et est constitué d'un octet d'une durée tm de 200 µm répété autant de fois que le permet la durée Pre.

La valeur de l'octet est représentative de l'émetteur du message. Par exemple, si l'émetteur du message est un capteur 20, l'octet a une première valeur. Si l'émetteur du message est le dispositif centralisé, l'octet a une seconde valeur, différente de la première valeur.

Si le dispositif de gestion de l'activation d'un module radio 50 est compris dans le dispositif centralisé 10, le processeur 200 vérifie si deux octets correspondant à la première valeur sont reçus.

Si le dispositif de gestion de l'activation d'un module radio 50 est compris dans un dispositif d'actionnement 30, le processeur 200 vérifie si deux octets correspondant à la seconde valeur sont reçus.

Si deux octets prédéterminés sont reçus, le processeur 200 passe à l'étape E305 et active une temporisation Rx'. La temporisation Rx' est égale au moins au temps nécessaire à la réception de deux octets. Rx' est, si par exemple la durée de transmission d'un octet est de 200µs, égale à 400µs.

Dans la négative, le processeur 200 retourne à l'étape E304.

A l'étape E304, le processeur 200 vérifie si la temporisation Rx est écoulée. Si la temporisation Rx est écoulée, le processeur 200 retourne à l'étape E300. Dans la négative, le processeur 200 retourne à l'étape E303.

Ainsi, en l'absence de détection de deux octets prédéterminés, la chaîne de réception du module radio 205 n'est mise en mode de réception que pendant la durée Rx, et en mode veille pendant la durée Tempo. La consommation d'énergie est ainsi fortement réduite.

Un exemple de mise en mode réception et mode veille est donné en référence à la Fig. 4b.

La **Fig. 4b** représente des chronogrammes de l'activation d'un module radio d'un dispositif de réception de message selon le premier mode de réalisation de la présente invention.

Dans l'exemple de la Fig. 4b, la chaîne de réception du module radio 205 n'est mise en mode de réception que pendant trois durées Rx, et en mode veille pendant deux durées Tempo.

A l'étape suivante E305, le processeur 200 vérifie si deux octets prédéterminés sont reçus.

Si le dispositif de gestion de l'activation d'une chaîne de réception d'un module radio 50 est compris dans le dispositif centralisé 10, le processeur 200 vérifie si deux octets correspondant à la première valeur sont reçus.

Si le dispositif de gestion de l'activation d'une chaîne de réception d'un module radio 50 est compris dans un dispositif d'actionnement 30, le processeur 200 vérifie si deux octets correspondant à la seconde valeur sont reçus.

Si deux octets prédéterminés sont reçus, le processeur 200 passe à l'étape E306.

Dans la négative, le processeur 200 passe à l'étape E307.

A l'étape E307, le processeur 200 vérifie si la temporisation Rx' est écoulée. Si la temporisation Rx' est écoulée, le processeur 200 retourne à l'étape E300. Dans la négative, le processeur 200 retourne à l'étape E305.

Il est à remarquer ici que la présente invention est décrite dans un exemple dans lequel la décision de l'activation de la réception de trames est effectuée à partir d'une détection de quatre octets prédéterminés pendant les temporisations Rx et Rx'.

Bien entendu, la présente invention est aussi applicable pour une détection d'un nombre plus important d'octets prédéterminés pendant les temporisations Rx et Rx', voire un nombre plus important de temporisations.

A l'étape E306, les trames suivant le préambule sont reçues par le processeur 200 et traitées.

Ainsi, à la réception de deux fois 2 octets prédéterminés, la chaîne de réception du module radio 205 est maintenue en mode réception pour la durée de réception de trois trames.

Un exemple de mise en mode réception et mode veille est donné en référence à la Fig. 4c.

La **Fig. 4c** représente un chronogramme de l'activation d'une chaîne de réception d'un module radio selon le premier mode de réalisation de la présente invention.

Dans l'exemple de la Fig. 4c, la chaîne de réception du module radio 205 est mise en mode de réception pendant une première durée Rx, suivie d'une durée Rx" égale à la somme de Rx, Rx' et de la durée nécessaire à la réception de trois trames et enfin pendant une autre durée Rx et en mode veille pendant deux durées Tempo.

La **Fig. 5** représente un exemple d'algorithme exécuté par le dispositif de gestion d'une chaîne de réception d'un module radio selon un second mode de réalisation de la présente invention.

Plus précisément, le présent algorithme est exécuté par le processeur 200 du dispositif de gestion de l'activation d'une chaîne de réception d'un module radio 50.

A l'étape E500, le processeur 200 met le module radio 205 dans un mode d'économie d'énergie. Le mode d'économie d'énergie consiste à mettre au moins la chaîne dédiée à la réception de messages dans un mode de veille consistant à interrompre l'alimentation électrique de tout ou partie des composants actifs de la chaîne de réception du module radio 205.

A cette même étape, le processeur 200 déclenche une temporisation Tempo. La temporisation Tempo est par exemple comprise entre 100 et 350 ms. Par exemple, la temporisation Tempo est égale à 250 ms.

A l'étape suivante E501, le processeur 200 vérifie si la temporisation Tempo est écoulée. Dans l'affirmative, le processeur 200 passe à l'étape E502. Dans la négative, le processeur 200 retourne à l'étape E501.

A l'étape E502, le processeur 200 met le module radio 205 dans un mode de réception. Le mode de réception consiste à alimenter en énergie électrique tout ou partie des composants actifs de la chaîne de réception du module radio 205. A cette même étape, le processeur 200 déclenche une temporisation Rxb. La temporisation Rxb est égale au moins au temps nécessaire à la réception de quatre octets. Rxb est, si par exemple la durée de transmission d'un octet est de 200µs, égale à 800µs.

A l'étape suivante E503, le processeur 200 vérifie si deux octets prédéterminés sont reçus. Selon la présente invention, un message radio est constitué d'un préambule suivi d'une ou plusieurs trames radio. Par exemple, le préambule a une durée de 250 ms et est suivi par trois trames d'une durée respective de 10 ms.

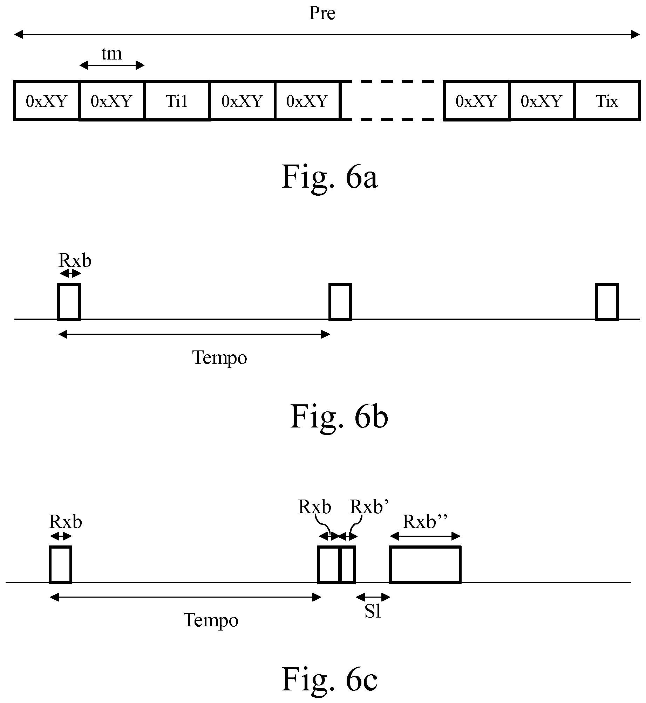

Un exemple de préambule est donné en référence à la Fig. 6a.

La **Fig. 6a** représente un exemple de préambule d'un message reçu par un dispositif de réception de message selon le second mode de réalisation de la présente invention.

Selon le second mode de réalisation de la présente invention, le préambule a une durée Pre de 250ms et est constitué d'octets d'une durée tm de 200 µm. Le préambule comporte des octets ayant la même valeur prédéterminée et des octets représentatifs d'un marquage temporel indiquant la position temporelle de ceux-ci dans le préambule.

Les octets ayant la même valeur prédéterminée sont représentés par la valeur 0xXY en Fig. 6a. Ces octets sont représentatifs de l'émetteur du message. Par exemple, si l'émetteur du message est un capteur 20, les octets ont une première valeur. Si l'émetteur du message est le dispositif centralisé 10, les octets ont une seconde valeur, différente de la première valeur.

Les octets représentatifs d'un marquage temporel sont notés Ti1, ..., Tix dans la Fig. 6a. Chaque marquage temporel permet de déterminer la position de celui-ci dans le préambule ou sa position par rapport à la fin du préambule ou toute information permettant de déterminer à quel moment, lorsque le marqueur temporel est reçu, le préambule se termine.

La Fig. 6a donne un exemple dans lequel un octet de marquage temporel est présent tous les deux octets de valeur prédéterminée. Bien entendu, d'autres combinaisons sont accessibles à l'homme du métier.

Si le dispositif de gestion de l'activation d'un module radio 50 est compris dans le dispositif centralisé 10, le processeur 200 vérifie si deux octets correspondant à la première valeur sont reçus.

Si le dispositif de gestion de l'activation d'un module radio 50 est compris dans un dispositif d'actionnement 30, le processeur 200 vérifie si deux octets correspondant à la seconde valeur sont reçus.

Si deux octets prédéterminés sont reçus, le processeur 200 mémorise la valeur de l'octet de marquage temporel si celui-ci est reçu, passe à l'étape E505 et active une temporisation Rxb'. La temporisation Rxb' est égale au moins au temps nécessaire à la réception de deux octets. Rxb' est, si par exemple la durée de transmission de trois octets est de 200µs, égale à 600µs.

Dans la négative, le processeur 200 passe à l'étape E504.

A l'étape E504, le processeur 200 vérifie si la temporisation Rxb est écoulée. Si la temporisation Rxb est écoulée, le processeur 200 retourne à l'étape E500. Dans la négative, le processeur 200 retourne à l'étape E503.

Ainsi, en l'absence de détection de deux octets prédéterminés, la chaîne de réception du module radio 205 n'est mise en mode de réception que pendant la durée Rxb, et en mode veille pendant la durée Tempo. La consommation d'énergie est ainsi fortement réduite.

Un exemple de mise en mode réception et mode veille est donné en référence à la Fig. 6b.

La **Fig. 6b** représente des chronogrammes de l'activation d'un module radio d'un dispositif de réception de message selon le second mode de réalisation de la présente invention.

Dans l'exemple de la Fig. 6b, la chaîne de réception du module radio 205 n'est mise en mode de réception que pendant trois durées Rxb, et en mode veille pendant deux durées Tempo.

A l'étape E505, le processeur 200 vérifie si deux octets prédéterminés sont reçus.

Si le dispositif de gestion de l'activation d'une chaîne de réception d'un module radio 50 est compris dans le dispositif centralisé 10, le processeur 200 vérifie si deux octets correspondant à la première valeur sont reçus.

Si le dispositif de gestion de l'activation d'une chaîne de réception d'un module radio 50 est compris dans un dispositif d'actionnement 30, le processeur 200 vérifie si deux octets correspondant à la seconde valeur sont reçus.

Si deux octets prédéterminés sont reçus, le processeur 200 mémorise la valeur de l'octet de marquage temporel si celui-ci est reçu et passe à l'étape E507.

Dans la négative, le processeur 200 passe à l'étape E506.

A l'étape E506, le processeur 200 vérifie si la temporisation Rxb' est écoulée. Si la temporisation Rxb' est écoulée, le processeur 200 retourne à l'étape E500. Dans la négative, le processeur 200 retourne à l'étape E505.

A l'étape E507, le processeur 200 détermine la durée entre le dernier octet lu et la fin du préambule ou la durée entre le dernier octet lu et le début de la première trame. Connaissant la durée du préambule ainsi que la valeur de l'octet de marquage temporel mémorisé à l'étape E503 ou E505, le processeur 200 détermine la durée SI entre le dernier octet lu et la fin du préambule ou la durée entre le dernier octet lu et le début de la première trame et active une temporisation égale à la durée S1.

A l'étape suivante E508, le processeur 200 met le module radio 205 dans un mode d'économie d'énergie.

A l'étape E509, le processeur 200 vérifie si la temporisation de durée SI a expiré.

Si la temporisation de durée SI a expiré, le processeur 200 passe à l'étape E510. Dans la négative, le processeur 200 retourne à l'étape E509.

A l'étape E510, le processeur 200 met le module radio 205 dans un mode de réception. Le mode de réception consiste à alimenter en énergie électrique tout ou partie des composants actifs de la chaîne de réception du module radio 205.

A l'étape E511, les trames suivant le préambule sont reçues par le processeur 200 et traitées.

Ainsi, à la réception de deux fois 2 octets prédéterminés, la chaîne de réception du module radio 205 est mise dans un mode d'économie d'énergie jusqu'à ce que la première trame soit reçue pour être ensuite mise en mode réception pour la durée de réception de trois trames.

Un exemple de mise en mode réception et mode veille est donné en référence à la Fig. 6c.

La **Fig. 6c** représente un chronogramme de l'activation d'une chaîne de réception d'un module radio selon le second mode de réalisation de la présente invention.

Dans l'exemple de la Fig. 4c, la chaîne de réception du module radio 205 est mise en mode de réception pendant une première durée Rxb, suivie d'une durée Rxb, Rxb', mise en mode veille pendant la durée SI pour être remise en mode réception pendant la durée Rbx" nécessaire à la réception de trois trames.

Bien entendu, la présente invention n'est nullement limitée aux modes de réalisation décrits ici, mais englobe, bien au contraire, toute variante à la portée de l'homme du métier.

## Revendications

1. Procédé de gestion de l'activation d'une chaîne de réception d'un module radio recevant au moins un message constitué d'un préambule et d'au moins une trame, **caractérisé en ce que** le procédé comporte les étapes de :
- mise (E302) de la chaîne de réception du module radio dans un mode de réception pendant une première durée,
- détermination (E303) si un nombre prédéterminé d'octets ayant une valeur prédéterminée est reçu pendant la première durée de mise de la chaîne de réception du module radio dans le mode de réception,
- maintien (E303) de la chaîne de réception du module radio dans un mode de réception pendant une seconde durée, inférieure ou égale à la première durée, si le nombre prédéterminé d'octets ayant une valeur prédéterminée est reçu pendant la première durée,
- détermination (E305) si un nombre prédéterminé d'octets compris dans le préambule ayant une valeur prédéterminée est reçu pendant la seconde durée de mise de la chaîne de réception du module radio dans le mode de réception,
- mise (E300) de la chaîne de réception du module radio dans un mode de veille pendant une troisième durée si le nombre prédéterminé d'octets ayant une valeur prédéterminée n'est pas reçu pendant la première durée, la troisième durée étant au moins deux cent fois plus longue que la première durée et égale ou inférieure à la durée du préambule,
- mise (E300) de la chaîne de réception du module radio dans un mode de veille pendant la troisième durée si le nombre prédéterminé d'octets ayant une valeur prédéterminée n'est pas reçu pendant la seconde durée,
- détermination, si un nombre prédéterminé d'octets compris dans le préambule ayant une valeur prédéterminée est reçu pendant la seconde durée de mise de la chaîne de réception du module radio dans le mode de réception, de la durée restante du préambule à recevoir,
- mise de la chaîne de réception du module radio dans un mode de veille pendant la durée restante déterminée,
- mise de la chaîne de réception du module radio dans un mode de réception pendant une quatrième durée, la quatrième durée étant égale à la durée de réception d'un nombre prédéterminé de trames suivant le préambule.

2. Procédé selon la revendication 1, **caractérisé en ce que** le procédé comporte en outre l'étape de:
- maintien (E306) de la chaîne de réception du module radio dans un mode de réception pendant une quatrième durée, la quatrième durée étant égale à la durée restante de préambule et la durée de réception d'un nombre prédéterminé de trames suivant le préambule.

3. Procédé selon la revendication 2, **caractérisé en ce que** la première durée est égale à la durée de réception de trois octets et la seconde durée est égale à la durée de réception de deux octets.

4. Procédé selon la revendication 1, **caractérisé en ce que** la durée restante du préambule à recevoir est déterminée à partir d'une information reçue pendant la première et/ou la seconde durée.

5. Procédé selon la revendication 1, **caractérisé en ce que** la somme des première et seconde durées est égale à la durée de réception d'au moins six octets.

6. Dispositif de gestion de l'activation d'une chaîne de réception d'un module radio recevant au moins un message constitué d'un préambule et d'au moins une trame, **caractérisé en ce que** le dispositif comporte :
- des moyens de mise de la chaîne de réception du module radio dans un mode de réception pendant une première durée,
- des moyens de détermination si un nombre prédéterminé d'octets compris dans le préambule et ayant une valeur prédéterminée est reçu pendant la première durée de mise de la chaîne de réception du module radio dans le mode de réception,
- des moyens de maintien de la chaîne de réception du module radio dans un mode de réception pendant une seconde durée, inférieure ou égale à la première durée, si le nombre prédéterminé d'octets ayant une valeur prédéterminée est reçu pendant la première durée,
- des moyens de détermination si un nombre prédéterminé d'octets compris dans le préambule et ayant une valeur prédéterminée est reçu pendant la seconde durée de mise de la chaîne de réception du module radio dans le mode de réception,
- des moyens de mise de la chaîne de réception du module radio dans un mode de veille pendant une troisième durée si le nombre prédéterminé d'octets ayant une valeur prédéterminée n'est pas reçu pendant la première durée, la troisième durée étant au moins deux cent fois plus longue que la première durée et égale ou inférieure à la durée du préambule,
- des moyens de mise de la chaîne de réception du module radio dans un mode de veille pendant la troisième durée si le nombre prédéterminé d'octets ayant une valeur prédéterminée n'est pas reçu pendant la seconde durée,
- des moyens de détermination, si un nombre prédéterminé d'octets ayant une valeur prédéterminée est reçu pendant la seconde durée de mise de la chaîne de réception du module radio dans le mode de réception, de la durée restante du préambule à recevoir,
- des moyens de mise de la chaîne de réception du module radio dans un mode de veille pendant la durée restante déterminée,
- des moyens de mise de la chaîne de réception du module radio dans un mode de réception pendant une quatrième durée, la quatrième durée étant égale à la durée de réception d'un nombre prédéterminé de trames suivant le préambule.

7. Système d'alarme anti intrusion, de domotique ou de gestion de la température dans un bâtiment comportant des capteurs, un dispositif centralisé et un dispositif d'actionnement, **caractérisé en ce que** le dispositif centralisé et le dispositif d'actionnement comportent un dispositif de gestion de l'activation d'une chaîne de réception d'un module radio selon la revendication 6.

## Patentansprüche

1. Verfahren zur Steuerung der Aktivierung einer Empfangskette eines Funkmoduls, das mindestens eine Nachricht empfängt, die von einer Präambel und mindestens einem Rahmen gebildet ist, **dadurch gekennzeichnet, dass** das Verfahren die folgenden Schritte umfasst:
- Setzen (E302) der Empfangskette des Funkmoduls in einen Empfangsmodus während einer ersten Dauer,
- Bestimmen (E303), ob eine vorbestimmte Anzahl von Oktetts mit einem vorbestimmten Wert während der ersten Dauer des Setzens der Empfangskette des Funkmoduls in den Empfangsmodus empfangen wird,
- Halten (E303) der Empfangskette des Funkmoduls in einem Empfangsmodus während einer zweiten Dauer, die kleiner oder gleich der ersten Dauer ist, wenn die vorbestimmte Anzahl von Oktetts mit einem vorbestimmten Wert während der ersten Dauer empfangen wird,
- Bestimmen (E305), ob eine vorbestimmte Anzahl von Oktetts, die in der Präambel enthalten sind und einen vorbestimmten Wert haben, während der zweiten Dauer des Setzens der Empfangskette des Funkmoduls in den Empfangsmodus empfangen wird,
- Setzen (E300) der Empfangskette des Funkmoduls in einen Standby-Modus während einer dritten Dauer, wenn die vorbestimmte Anzahl von Oktetts mit einem vorbestimmten Wert während der ersten Dauer nicht empfangen wird, wobei die dritte Dauer mindestens zweihundertmal länger als die erste Dauer oder gleich oder kleiner als die Dauer der Präambel ist,
- Setzen (E300) der Empfangskette des Funkmoduls in einen Standby-Modus während der dritten Dauer, wenn die vorbestimmte Anzahl von Oktetts mit einem vorbestimmten Wert während der zweiten Dauer nicht empfangen wird,
- Bestimmen, wenn eine vorbestimmte Anzahl von Oktettes, die in der Präambel enthalten sind und einen vorbestimmten Wert haben, während der zweiten Dauer des Setzens der Empfangskette des Funkmoduls in den Empfangsmodus empfangen wird, der Restdauer der zu empfangenden Präambel,
- Setzen der Empfangskette des Funkmoduls in einen Standby-Modus während der bestimmten Restdauer,
- Setzen der Empfangskette des Funkmoduls in einem Empfangsmodus während einer vierten Dauer, wobei die vierte Dauer gleich der Empfangsdauer einer vorbestimmten Anzahl von Rahmen gemäß der Präambel ist.

2. Verfahren nach Anspruch 1, **dadurch gekennzeichnet, dass** das Verfahren ferner folgenden Schritt umfasst:
- Halten (E306) der Empfangskette des Funkmoduls in einem Empfangsmodus während einer vierten Dauer, wobei die vierte Dauer gleich der Restdauer der Präambel und der Empfangsdauer einer vorbestimmten Anzahl von Rahmen gemäß der Präambel ist.

3. Verfahren nach Anspruch 2, **dadurch gekennzeichnet, dass** die erste Dauer gleich der Empfangsdauer von drei Oktetts ist, und die zweite Dauer gleich der Empfangsdauer von zwei Oktetts ist.

4. Verfahren nach Anspruch 1, **dadurch gekennzeichnet, dass** die Restdauer der zu empfangenden Präambel auf Basis einer Information bestimmt wird, die während der ersten und/oder der zweiten Dauer empfangen wird.

5. Verfahren nach Anspruch 1, **dadurch gekennzeichnet, dass** die Summe der ersten und zweiten Dauern gleich der Empfangsdauer von mindestens sechs Oktetts ist.

6. Vorrichtung zur Steuerung der Aktivierung einer Empfangskette eines Funkmoduls, das mindestens eine Nachricht empfängt, die von einer Präambel und mindestens einem Rahmen gebildet ist, **dadurch gekennzeichnet, dass** die Vorrichtung umfasst:
- Mittel zum Setzen der Empfangskette des Funkmoduls in einen Empfangsmodus während einer ersten Dauer,
- Mittel zum Bestimmen, ob eine vorbestimmte Anzahl von Oktetts mit einem vorbestimmten Wert während der ersten Dauer des Setzens der Empfangskette des Funkmoduls in den Empfangsmodus empfangen wird,
- Mittel zum Halten der Empfangskette des Funkmoduls in einem Empfangsmodus während einer zweiten Dauer, die kleiner oder gleich der ersten Dauer ist, wenn die vorbestimmte Anzahl von Oktetts mit einem vorbestimmten Wert während der ersten Dauer empfangen wird,
- Mittel zum Bestimmen, ob eine vorbestimmte Anzahl von Oktetts, die in der Präambel enthalten sind und einen vorbestimmten Wert haben, während der zweiten Dauer des Setzens der Empfangskette des Funkmoduls in den Empfangsmodus empfangen wird,
- Mittel zum Setzen der Empfangskette des Funkmoduls in einen Standby-Modus während einer dritten Dauer, wenn die vorbestimmte Anzahl von Oktetts mit einem vorbestimmten Wert während der ersten Dauer nicht empfangen wird, wobei die dritte Dauer mindestens zweihundertmal länger als die erste Dauer oder gleich oder kleiner als die Dauer der Präambel ist,
- Mittel zum Setzen der Empfangskette des Funkmoduls in einen Standby-Modus während der dritten Dauer, wenn die vorbestimmte Anzahl von Oktetts mit einem vorbestimmten Wert während der zweiten Dauer nicht empfangen wird,
- Mittel zum Bestimmen, wenn eine vorbestimmte Anzahl von Oktettes, die in der Präambel enthalten sind und einen vorbestimmten Wert haben, während der zweiten Dauer des Setzens der Empfangskette des Funkmoduls in den Empfangsmodus empfangen wird, der Restdauer der zu empfangenden Präambel,
- Mittel zum Setzen der Empfangskette des Funkmoduls in einen Standby-Modus während der bestimmten Restdauer,
- Mittel zum Setzen der Empfangskette des Funkmoduls in einem Empfangsmodus während einer vierten Dauer, wobei die vierte Dauer gleich der Empfangsdauer einer vorbestimmten Anzahl von Rahmen gemäß der Präambel ist.

7. Einbruchalarmsystem, Hausnetzsystem oder System zur Steuerung der Temperatur in einem Gebäude, umfassend Sensoren, eine zentralisierte Vorrichtung und eine Betätigungsvorrichtung, **dadurch gekennzeichnet, dass** die zentralisierte Vorrichtung und die Betätigungsvorrichtung eine Vorrichtung zur Steuerung der Aktivierung einer Empfangskette eines Funkmoduls nach Anspruch 6 umfassen.

## Claims

1. Method for managing the activation of a reception chain of a radio module receiving at least one message consisting of a preamble and of at least one frame, **characterized in that** the method comprises the steps of:
- placing (E302) the reception chain of the radio module in a reception mode for a first duration,
- determining (E303) whether a predetermined number of bytes having a predetermined value is received during the first duration of placing the reception chain of the radio module in the reception mode,
- maintaining (E303) the reception chain of the radio module in a reception mode for a second duration, less than or equal to the first duration, if the predetermined number of bytes having a predetermined value is received during the first duration,
- determining (E305) whether a predetermined number of bytes included in the preamble having a predetermined value is received during the second duration of placing the reception chain of the radio module in the reception mode,
- placing (E300) the reception chain of the radio module in a standby mode for a third duration if the predetermined number of bytes having a predetermined value is not received during the first duration, the third duration being at least two hundred times longer than the first duration and equal to or less than the duration of the preamble,
- placing (E300) the reception chain of the radio module in a standby mode for the third duration if the predetermined number of bytes having a predetermined value is not received during the second duration,
- determining, if a predetermined number of bytes included in the preamble having a predetermined value is received during the second duration of placing the reception chain of the radio module in the reception mode, the remaining duration of the preamble to be received,
- placing the reception chain of the radio module in a standby mode for the determined remaining duration,
- placing the reception chain of the radio module in a reception mode for a fourth duration, the fourth duration being equal to the duration of reception of a predetermined number of frames following the preamble.

2. Method according to Claim 1, **characterized in that** the method furthermore comprises the step of:
- maintaining (E306) the reception chain of the radio module in a reception mode for a fourth duration, the fourth duration being equal to the remaining duration of preamble and the duration of reception of a predetermined number of frames following the preamble.

3. Method according to Claim 2, **characterized in that** the first duration is equal to the duration of reception of three bytes and the second duration is equal to the duration of reception of two bytes.

4. Method according to Claim 1, **characterized in that** the remaining duration of the preamble to be received is determined on the basis of an information item received during the first and/or the second duration.

5. Method according to Claim 1, **characterized in that** the sum of the first and second durations is equal to the duration of reception of at least six bytes.

6. Device for managing the activation of a reception chain of a radio module receiving at least one message consisting of a preamble and of at least one frame, **characterized in that** the device comprises:
- means for placing the reception chain of the radio module in a reception mode for a first duration,
- means for determining whether a predetermined number of bytes included in the preamble and having a predetermined value is received during the first duration of placing the reception chain of the radio module in the reception mode,
- means for maintaining the reception chain of the radio module in a reception mode for a second duration, less than or equal to the first duration, if the predetermined number of bytes having a predetermined value is received during the first duration,
- means for determining whether a predetermined number of bytes included in the preamble and having a predetermined value is received during the second duration of placing the reception chain of the radio module in the reception mode,
- means for placing the reception chain of the radio module in a standby mode for a third duration if the predetermined number of bytes having a predetermined value is not received during the first duration, the third duration being at least two hundred times longer than the first duration and equal to or less than the duration of the preamble,
- means for placing the reception chain of the radio module in a standby mode for the third duration if the predetermined number of bytes having a predetermined value is not received during the second duration,
- means for determining, if a predetermined number of bytes having a predetermined value is received during the second duration of placing the reception chain of the radio module in the reception mode, the remaining duration of the preamble to be received,
- means for placing the reception chain of the radio module in a standby mode for the determined remaining duration,
- means for placing the reception chain of the radio module in a reception mode for a fourth duration, the fourth duration being equal to the duration of reception of a predetermined number of frames following the preamble.

7. Anti-intrusion alarm system, home automation system or system for managing the temperature in a building comprising sensors, a centralized device and an actuation device, **characterized in that** the centralized device and the actuation device comprise a device for managing the activation of a reception chain of a radio module according to Claim 6.
